# EUROPÄISCHE PATENTSCHRIFT

(11) **EP 0 490 870 B1**
(45) Veröffentlichungstag und Bekanntmachung des Hinweises auf die Patenterteilung: **09.04.1997**
(21) Anmeldenummer: 91890299.0
(22) Anmeldetag: 06.12.1991
(51) Int. Cl.: D01F 2/00, C08B 1/00

(54) **Verfahren zur Herstellung von Celluloseformkörpern**
Process for the production of cellulose articles
Procédé pour la fabrication d'objets cellulosiques

(30) Priorität: 07.12.1990 AT 2482/90
(43) Veröffentlichungstag der Anmeldung: 17.06.1992
(73) Patentinhaber: Lenzing Aktiengesellschaft, A-4860 Lenzing (AT)
(72) Erfinder: Eichinger, Dieter, Dr., A-4840 Vöcklabruck (AT); Jurhovic, Raimund, A-4860 Lenzing (AT); Astegger, Stephan, Mag. Dr., A-4840 Vöcklabruck (AT); Firgo, Heinrich, Dipl.-Ing. Dr., A-4840 Vöcklabruck (AT); Hinterholzer, Peter, Dipl.-Ing., A-4850 Timelkam (AT); Weinzierl, Karin, Dipl.-Ing., A-4850 Timelkam (AT); Zikeli, Stefan, Ing., A-4844 Regau (AT)
(74) Vertreter: Müllner, Erwin, Dr.

(56) Entgegenhaltungen:
- EP-A- 0 299 824
- US-A- 3 767 756
- US-A- 4 416 698

## Beschreibung

Die vorliegende Erfindung betrifft ein Verfahren zur Herstellung von Celluloseformkörpern aus einer Lösung von Cellulose in N-Methylmorpholin-N-oxid(NMMO) und Wasser, bei dem die Lösung geformt und anschließend die Cellulose in einem Fällbad, das Wasser und NMMO enthält, ausgefällt wird.

Es ist z.B. aus der US-PS 4 196 282 bekannt, eine Lösung von Cellulose in N-Methylmorpholin-N-oxid (im folgenden mit NMMO abgekürzt) und Wasser herzustellen. Celluloselösungen werden z.B. zur Herstellung von Cellulosefasern oder anderen Formkörpern auf Cellulosebasis benötigt. Zu diesem Zweck wird die Lösung durch Spinndüsen in ein Fällbad extrudiert. Die Verwendung eines Gemisches von NMMO und Wasser als Lösungsmittel hat verschiedene Vorteile; vor allem ist hervorzuheben, daß ein (nahezu) geschlossener Lösungsmittelkreislauf möglich ist, sodaß die Umweltbelastung sehr gering gehalten werden kann.

Beim NMMO-Prozeß wird die in NMMO und Wasser gelöste Cellulose in einem NMMO-hältigen Fällbad koaguliert. Die Faser wird dann gewaschen, das Waschwasser in das Fällbad rückgeführt und das Fällbad wird eingedampft. Das Destillat wird zum Waschen der Faser verwendet (s.o.), und das NMMO-Konzentrat wird wiederum zur erneuten Lösungsherstellung verwendet.

Im Fällbad war die NMMO-Konzentration bisher auf ca 20% bis 25% limitiert, da bei höheren Konzentrationen die textilmechanischen Eigenschaften der Faser beeinträchtigt wurden. Es wäre jedoch wünschenswert, die NMMO-Konzentration im Fällbad zu heben, um anschließend weniger Wasser aus dem Fällbad verdampfen zu müssen.

Es ist somit Aufgabe der vorliegenden Erfindung, das Verfahren der eingangs genannten Art so auszugestalten, daß auch bei hohen NMMO-Konzentrationen im Fällbad gute Fasereigenschaften erhalten werden.

Diese Aufgabe wird erfindungsgemäß dadurch gelöst, daß die Temperatur des Fällbades höchstens 0°C beträgt.

Überraschenderweise wurde nämlich gefunden, daß man NMMO-Konzentrationen bis über 40% im Fällbad anwenden kann,wenn man die Fällbadtemperatur auf unter 0°C herabsetzt.

Anhand der folgenden Beispiele wird die Erfindung mit dem Stand der Technik verglichen, um die oben aufgestellten Behauptungen zu untermauern.

### Beispiele 1 bis 6:

2276 g Zellstoff (Feststoff- oder Trockengehalt 94%, DP 750 [DP= Durchschnittspolymerisationsgrad] , alpha = 98%) und 0,02% Gallussäurepropylester werden in 26139 g 60%-iger wäßriger N-Methylmorpholin-N-oxid-Lösung suspendiert; danach wird während 2 Stunden bei 100°C und einem Vakuum von 50 bis 300 mbar 9415 g Wasser abdestilliert. Die dabei entstandene Spinnlösung hatte folgende Zusammensetzung: Cellulose: 10%, Wasser: 12%, NMMO: 78%. Sie wurde durch eine Düse mit 589 Löchern (Dösenlochdurchmesser 130 µm) gepreßt. Die Spinntemperatur betrug dabei 75°C. Die entstandenen Fasern wurden - nach Verstreckung in einem Luftspalt- in einem NMMO-hältigen Fällbad ausgefällt. Der Titer, die NMMO-Konzentration im Fällbad und die Temperatur des Fällbades sind für die einzelnen Beispiele in Tabelle 1 angegeben; aus dieser Tabelle sind auch die sich jeweils ergebenden Fasereigenschaften zu entnehmen. Dabei bedeutet:
- FFk: Faserfestigkeit (konditioniert)
- FDk: Faserdehnung (konditioniert)
- SF: Schlingenfestigkeit

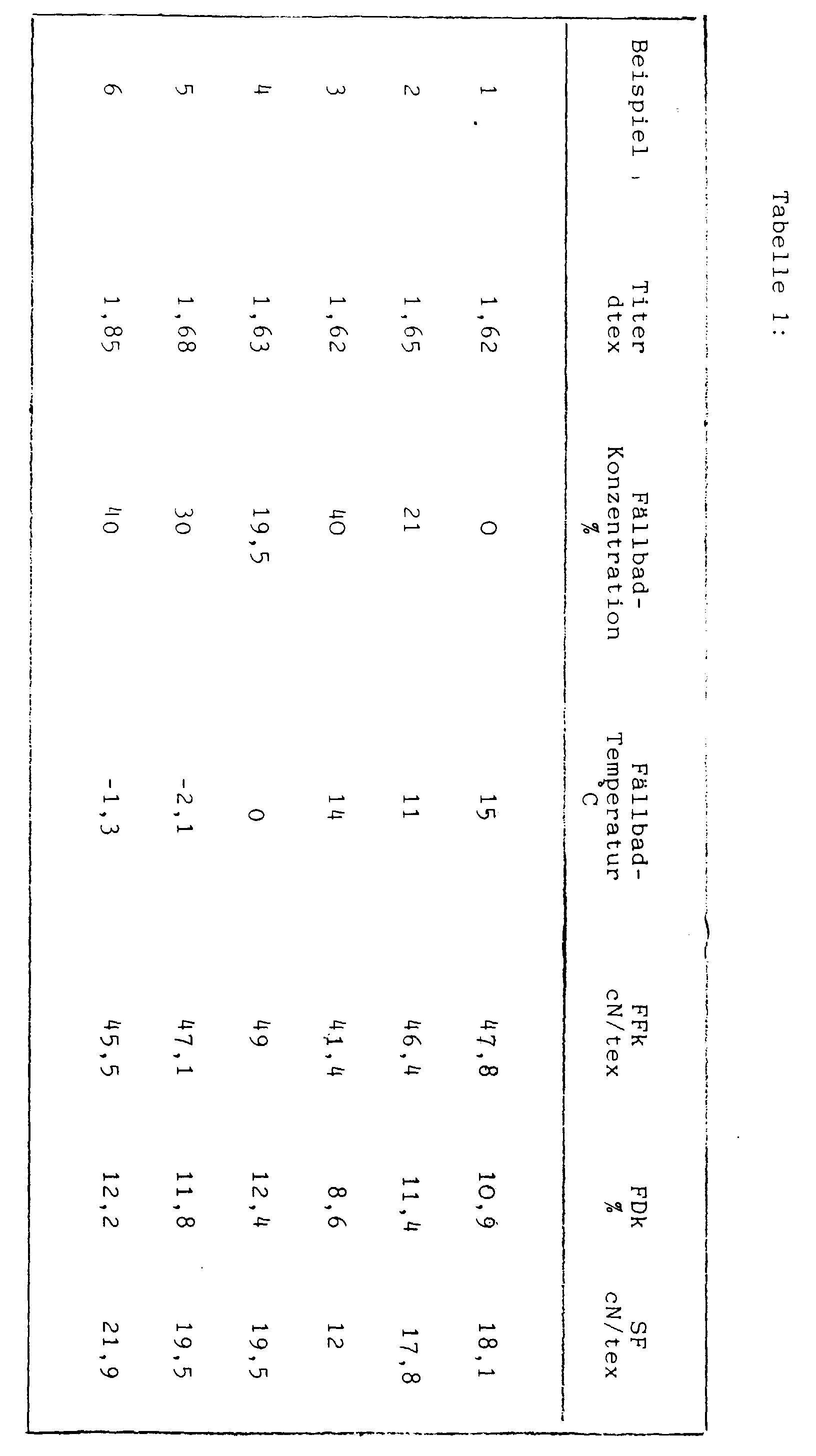

Beispiele 1 und 2 entsprechen dem Stand der Technik; es wird im Fällbad reines Wasser (Beispiel 1) bzw. Wasser mit ca. 20% NMMO (Beispiel 2) verwendet; die Fällbadtemperaturen sind relativ hoch (15 bzw. 11°C). Die in diesen Fällbädern ausgefällten Cellulosefasern haben befriedigende Eigenschaften. Bei Beispiel 3 wurde versucht, die NMMO-Konzentration im Fällbad auf 40% anzuheben; dadurch werden die Fasereigenschaften aber deutlich schlechter.

Beispiele 4 bis 6 sind erfindungsgemäße Beispiele, das heißt die Temperaturen betragen höchstens 0°C. Wie man sieht, wirkt sich bei diesen Temperaturen eine Erhöhung der NMMO-Konzentration im Fällbad wesentlich weniger auf die Fasereigenschaften aus; so ist z.B. die Faser nach Beispiel 5 durchaus gleichwertig mit der nach Beispiel 1.

## Patentansprüche

1. Verfahren zur Herstellung von Celluloseformkörpern aus einer Lösung von Cellulose in N-Methylmorpholin-N-oxid (NMMO) und Wasser, bei dem die Lösung geformt und anschließend die Cellulose in einem Fällbad, das Wasser und NMMO enthält, ausgefällt wird, dadurch gekennzeichnet, daß die Temperatur des Fällbades höchstens 0°C beträgt.

## Claims

1. Process for the production of cellulose moulded bodies from a solution of cellulose in N-methyl morpholine-N-oxide (NMMO) and water, in which the solution is shaped and thereafter the cellulose is precipitated out in a precipitation bath which contains water and NMMO, characterised in that the temperature of the precipitation bath is at most 0°C.

## Revendications

1. Procédé de préparation de produits façonnés en cellulose à partir d'une solution de cellulose dans du N-oxyde de N-méthylmorpholine (NMMO) et de l'eau, dans lequel on forme la solution puis on fait précipiter la cellulose dans un bain de précipitation formé d'eau et de NMMO, ce procédé étant caractérisé en ce que la température du bain de précipitation est au maximum égale à 0°C.
